# FASCICULE DE BREVET EUROPEEN

(11) **EP 1 680 962 B1**
(45) Date de publication et mention de la délivrance du brevet: **22.07.2009**
(21) Numéro de dépôt: 06290087.3
(22) Date de dépôt: 13.01.2006
(51) Int. Cl.: A21C 1/14, B01F 7/16

(54) **Appareil électrique de traitement de produits alimentaires à sécurité améliorée**
Elektrisches Gerät zum Verarbeiten von Lebensmitteln mit verbesserter Sicherheit
Electric device for processing food with better security

(30) Priorité: 18.01.2005 FR 0500515
(43) Date de publication de la demande: 19.07.2006
(73) Titulaire: Electrolux Professionnel, 60300 Senlis (FR)
(72) Inventeur: Descomps, Xavier, 23200 Blessac (FR); Lallier, Christian, 23200 Aubusson (FR)
(74) Mandataire: Jacobson, Claude

(56) Documents cités:
- DE-A1- 2 907 743
- DE-C- 435 663
- FR-A- 2 728 485
- SU-A1- 1 472 111
- US-A- 5 207 506

## Description

L'invention concerne un appareil de traitement de produits alimentaires, comportant :
- un bâti fixe,
- un dispositif électrique d'entraînement d'un outil de traitement,
- un couvercle monté pivotant sur le bâti et pourvu d'une ouverture de chargement des produits à traiter,
- un levier doté d'un organe presseur prévu pour s'engager dans l'ouverture, ledit levier étant monté pivotant par rapport au couvercle autour d'un axe de pivotement, et
- un premier dispositif de sécurité relié au dispositif d'entraînement et prévu pour couper l'alimentation électrique du dispositif d'entraînement sur au moins une plage de positions angulaires du levier autour de l'axe.

Le document US 5 207 506 divulgue un example d'un appareil avec un dispositif de sécurité.

Dans certains appareils connus de ce type, le levier est articulé sur le couvercle, et le dispositif de sécurité associé au levier comprend un interrupteur agencé sur le bâti, actionné par une partie solidaire du levier selon la position angulaire de ce dernier par rapport au couvercle.

Ainsi, le fonctionnement de la sécurité associée au levier est influencé par la position du couvercle par rapport au bâti, et son efficacité peut être affectée dès lors que le couvercle n'est pas dans sa position de travail fermée.

En outre, les appareils de ce type sont généralement dotés d'une sécurité associée au couvercle, prévue pour couper l'alimentation électrique lorsque le couvercle est insuffisamment fermé sur l'espace de traitement entourant l'outil, et laisse un accès possible à ce dernier. Les sécurités associées respectivement au levier et au couvercle ne sont alors pas indépendantes, de sorte qu'elles ne fonctionnent pas avec une précision suffisante pour garantir un niveau de sécurité optimal pour l'utilisateur.

L'invention a pour but de résoudre les inconvénients précités.

A cet effet, l'invention a pour objet un appareil du type ci-dessus, dans lequel le couvercle et le levier sont montés pivotants autour d'un même axe, et le premier dispositif de sécurité est prévu pour agir sur l'alimentation électrique du dispositif d'entraînement en fonction de la position angulaire du levier par rapport au bâti.

Suivant d'autres caractéristiques de l'invention :
- le premier dispositif de sécurité comprend un commutateur électrique, relié au dispositif d'entraînement et doté d'un organe d'actionnement, et un élément formant came solidaire du levier agencé pour agir sur l'organe d'actionnement de sorte à couper l'alimentation électrique sur ladite plage prédéterminée de positions angulaires ;
- le commutateur est solidaire du bâti ;
- l'élément formant came et le commutateur sont agencés à l'intérieur du bâti ;
- le levier est solidaire en rotation d'un arbre monté pivotant sur le bâti et le couvercle est monté libre en rotation autour dudit arbre, l'arbre matérialisant l'axe commun de pivotement du levier et du couvercle ;
- le bâti comprend une paire de manchons coaxiaux fixes formant paliers pour l'arbre, dans lesquels est engagé coaxialement l'arbre de façon démontable ;
- l'arbre et le levier comprennent des organes complémentaires de solidarisation en rotation, prévus pour venir en prise mutuelle par engagement axial ;
- le levier est monté en prise sur l'arbre entre les manchons creux formant paliers ;
- l'organe de solidarisation de l'arbre est un organe en saillie radiale, et un premier des manchons creux comprend un évidement axial complémentaire de guidage et d'orientation, prévu pour n'autoriser le montage axial de l'arbre dans ledit manchon et son démontage que dans une seule position angulaire prédéterminée, correspondant à une position de référence du levier ;
- l'élément formant came est une bague montée sur l'arbre de façon démontable par engagement axial, et solidarisée en rotation avec l'arbre au moyen de formes complémentaires d'entraînement pour n'autoriser l'engagement axial de l'arbre dans la bague que dans une seule position angulaire relative prédéterminée, correspondant à une position de référence de l'élément formant came ;
- les formes complémentaires d'entraînement de la bague et de l'arbre sont prévues pour que la position de référence du levier corresponde à la position de référence de l'élément formant came ;
- l'appareil comprend un deuxième dispositif de sécurité, relié au dispositif d'entraînement et prévu pour couper l'alimentation électrique du dispositif d'entraînement dès l'ouverture du couvercle par rapport au bâti ; et
- le deuxième dispositif de sécurité comprend un dispositif de détection sans contact, notamment magnétique, ayant un organe émetteur agencé dans le couvercle, et un organe sensible agencé dans un caisson solidaire du bâti.

Un mode particulier de réalisation de l'invention va maintenant être décrit en référence aux dessins annexés, sur lesquels :
- la Figure 1 est une vue en perspective d'un appareil conforme à l'invention, le couvercle étant en position fermée et le levier en position haute,
- la Figure 2 est une vue partielle en coupe, dans le plan 2-2 vertical passant par l'axe de pivotement du levier et du couvercle, de l'appareil de la Figure 1, le levier étant en position basse ;
- les Figures 3 et 4 sont des vues partielles en perspective de l'appareil de la Figure 1, illustrant le fonctionnement du dispositif de sécurité associé au levier, ce dernier étant respectivement en position basse et en position haute;
- les Figures 3A et 4A sont des vues schématiques de détail, correspondant respectivement aux Figures 3 et 4, illustrant les positions relatives de la came et de l'organe d'actionnement du commutateur du dispositif de sécurité associé au levier;
- les Figures 5 et 6 sont des vues partiellement éclatées des parties de l'appareil représentées sur les Figures 3 et 4, illustrant le démontage du levier dans deux étapes successives ; et
- la Figure 7 est une vue analogue à la Figure 1, illustrant le démontage du levier.

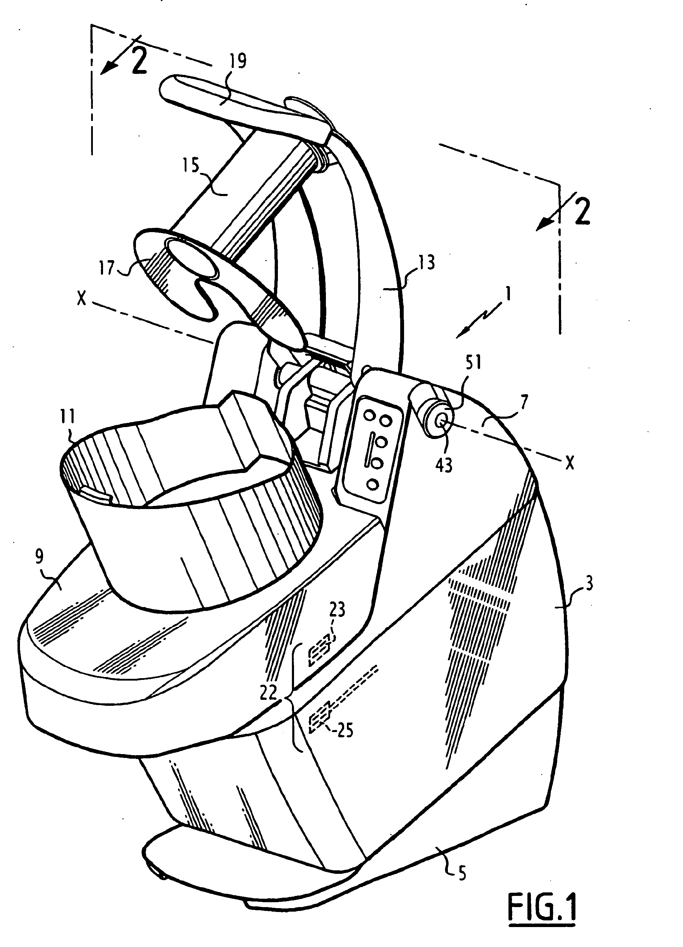

Sur la Figure 1, on a représenté un appareil électrique 1 de traitements de produits alimentaires, en particulier un appareil du type coupe-légumes.

Cet appareil comprend un caisson 3, fixe, monté sur socle 5 par lequel l'appareil peut reposer sur un plan de travail.

Dans toute la description qui va suivre, l'appareil 1 sera supposé être dans une position normale de fonctionnement, le socle 5 étant en appui sur un plan horizontal.

De façon classique, l'appareil comprend un outil de traitement, tel qu'un plateau ou un couteau, monté rotatif sur le bâti 7, et un dispositif électrique d'entraînement de l'outil logé dans le caisson. Ce dispositif d'entraînement comprend notamment un moteur électrique et un mécanisme de transmission.

Dans sa partie supérieure, le caisson 3 est solidaire d'un bâti fixe 7, duquel fait saillie un arbre de sortie du dispositif d'entraînement. L'outil peut être fixé de façon démontable sur cette portion saillante de l'arbre.

L'appareil 1 comporte d'autre part un couvercle 9 monté pivotant sur le bâti 7, autour d'un axe horizontal X-X. Le couvercle 9 est pourvu d'une cheminée, ou trémie 11, délimitant une ouverture de chargement et de guidage des produits à traiter. Lorsque le couvercle 9 est fermé sur le bâti 7, il enveloppe l'outil, et délimite avec le bâti un espace de traitement dans lequel débouche la trémie 11.

L'appareil 1 comprend en outre un levier 13, monté pivotant sur le bâti 7 autour de l'axe X-X, et doté d'un organe presseur 15 prévu pour s'engager dans l'ouverture de la trémie 11, de façon à presser sur l'outil les aliments introduits dans la trémie.

Le levier 13 et le couvercle 9 sont articulés sur le bâti 7 autour de l'axe d'articulation X-X commun, au moyen d'un mécanisme d'articulation qui sera décrit plus loin.

L'organe presseur 15 est pourvu d'un plateau de pressage 17 à son extrémité libre, qui obture l'essentiel de l'ouverture de la trémie 11, et ainsi l'accès à l'espace de traitement, lorsque l'organe presseur 15 est engagé dans la trémie par l'utilisateur.

Le levier 13 comporte une poignée 19 permettant l'actionnement de l'organe presseur 15 par l'utilisateur.

Afin d'assurer une sécurité d'utilisation optimale, l'appareil 1 est doté de deux dispositifs de sécurité, prévus pour couper l'alimentation électrique du dispositif d'entraînement de l'outil, lorsque la position du couvercle 9 et/ou du levier 13 par rapport au bâti 7 permet l'accès à l'espace de traitement et ainsi à l'outil.

A cet effet, chacun des dispositifs de sécurité est relié au dispositif d'entraînement et agit selon la position angulaire respectivement du couvercle 9 et du levier 13 autour de l'axe X-X.

Un premier dispositif de sécurité, qui sera décrit plus en détail ultérieurement, agit sur l'alimentation du dispositif d'entraînement en fonction de la position angulaire du levier 13 par rapport au bâti 7.

Le deuxième dispositif de sécurité, schématisé sur la Figure 1 sous la référence 22, agit sur l'alimentation électrique du dispositif d'entraînement en fonction de la position angulaire du couvercle 9 par rapport au bâti 7.

Ce dispositif 22 fonctionne sans contact, et peut être avantageusement de type magnétique. Ainsi, ce dispositif peut comprendre un organe émetteur, sous la forme d'un aimant permanent 23 logé dans un élément d'ouverture du couvercle 9, et un organe récepteur, sous la forme d'un détecteur de champ magnétique 25, logé dans le caisson 3. Le détecteur magnétique 25 est relié à un circuit électronique de détection.

Le dispositif de sécurité 22 coupe l'alimentation électrique du dispositif d'entraînement de l'outil dès lors que le champ magnétique détecté par le détecteur 25 a une intensité inférieure à un seuil prédéterminé, c'est-à-dire lorsque la distance entre l'aimant 23 et le détecteur fixe 25 atteint et dépasse une valeur de seuil. La coupure se produit donc dès lors que le couvercle 9 est ouvert par rapport au bâti 7.

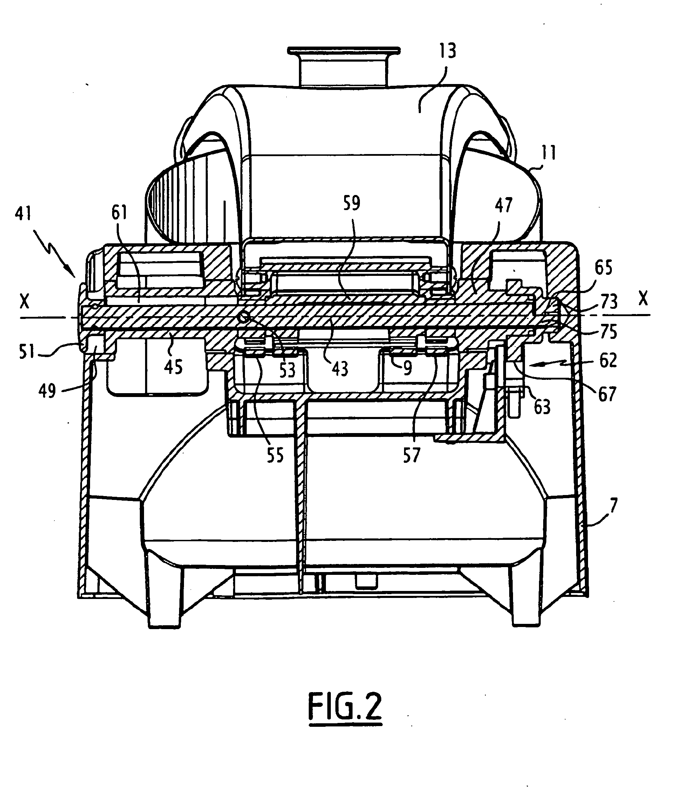

Sur la Figure 2, on a représenté partiellement l'appareil de la Figure 1, en coupe dans le plan vertical passant par l'axe d'articulation X-X. Sur cette figure, le caisson 3 et le socle 5 n'ont pas été représentés.

En référence à la Figure 2, on va décrire plus précisément le mécanisme 41 d'articulation en rotation autour de l'axe X-X du couvercle 9 et du levier 13 sur le bâti 7.

Ce mécanisme 41 comprend un arbre 43 solidaire en rotation du levier 13, et une paire de manchons creux 45, 47 fixés coaxialement dans le bâti 7 et formant paliers pour l'arbre 43.

L'arbre 43 est engagé coaxialement dans les paliers 45, 47 de façon à pouvoir, dans sa position de montage complet, tourillonner librement dans ces paliers 45, 47.

Les paliers 45, 47 sont espacés axialement l'un de l'autre. Le premier palier 45 est fixé dans le bâti 7 en regard d'une ouverture 49, ménagée dans une paroi latérale du bâti et prévue pour l'engagement axial de l'arbre 43 dans les paliers 45, 47. Le deuxième palier 47 est fixé dans le bâti 7 du côté de la paroi latérale opposée du bâti.

L'arbre 43 est doté d'une poignée 51, prévue pour assurer avec l'extrémité correspondante du palier 45 une butée d'arrêt d'engagement axial de l'arbre 43. Cette butée définit la position de montage complet de l'arbre 43 dans les paliers 45, 47.

Dans une partie intermédiaire de sa largeur, l'arbre 43 comprend un plot 53 en saillie radiale, prévu pour assurer la solidarisation en rotation du levier 13 et de l'arbre 43. Ce plot 53 peut être rapporté sur l'arbre sous la forme d'une goupille, ou être réalisé d'une pièce avec ce dernier. Dans l'exemple représenté, le plot 53 fait saillie de l'arbre 43 dans une seule direction radiale.

Le levier 13 est relié à l'arbre 43 par l'intermédiaire de deux flasques 55, 57 formés à l'extrémité d'articulation du levier. Ces flasques 55, 57 sont parallèles et pourvus de deux alésages coaxiaux complémentaires de l'arbre 43. Le flasque 55 situé du côté de l'ouverture 49 d'introduction de l'arbre a un alésage dont la forme peut recevoir axialement de façon complémentaire l'arbre et le plot 53. L'alésage et le plot constituent des organes complémentaires de solidarisation en rotation du levier 13 et de l'arbre 43, prévus pour venir en prise mutuelle par engagement axial.

Comme on le voit sur la Figure 2, en position montée du levier 13 sur le bâti 7, le levier est monté en prise sur l'arbre 43, entre les paliers 45, 47, chacun des flasques 55, 57 faisant contact axialement avec un palier respectif 45, 47.

Le couvercle 9 est monté libre en rotation sur l'arbre 43, par l'intermédiaire d'une partie de charnière 59 montée rotative sur une section centrale de l'arbre 43. Cette section centrale est comprise entre les flasques 55, 57 lorsque l'arbre 43 est complètement engagé dans les paliers 45, 47.

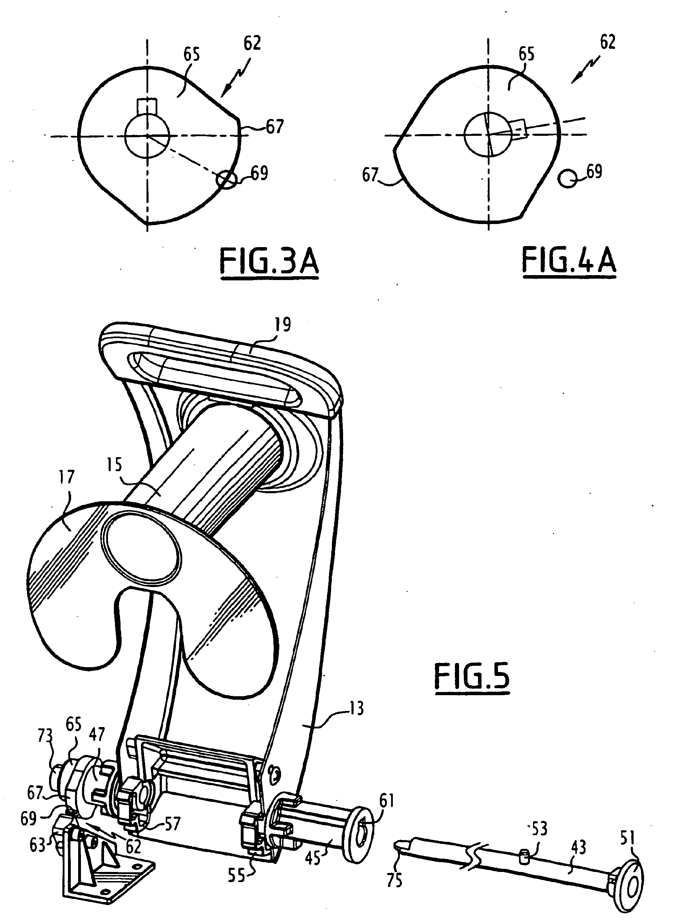

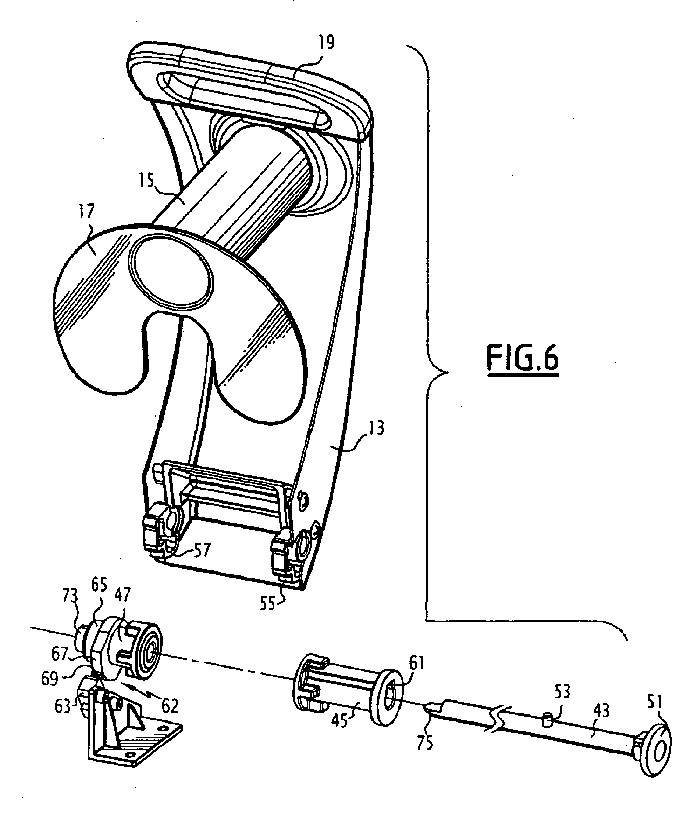

Comme cela peut être vu sur la Figure 2, mais également sur les Figures 5 et 6 notamment, le premier palier 45 est doté d'un évidement axial 61 de section complémentaire du plot 53, grâce auquel l'arbre 43 ne peut être engagé complètement dans les paliers 45, 47 qu'à la condition d'une orientation angulaire prédéterminée de l'arbre autour de l'axe X-X. Le palier 45 étant fixe dans le bâti 7, cette orientation de référence est liée au bâti.

De la même façon, l'engagement axial de l'arbre 43 ne peut être poursuivi jusque dans la position de montage complet qu'à la condition que l'alésage du flasque 55 coïncide avec celui du palier 45, c'est-à-dire à la condition que le levier 13 se trouve dans une orientation de référence.

En l'occurrence, l'orientation de référence du levier est définie par la position haute, c'est-à-dire entièrement relevée, du levier par rapport au bâti 7.

Comme cela a été représenté sur la Figure 2, le premier dispositif de sécurité 62 comprend un commutateur électrique 63, sous la forme d'un micro-rupteur, qui est fixé au bâti 7, à l'intérieur de ce dernier, à proximité de l'axe X-X.

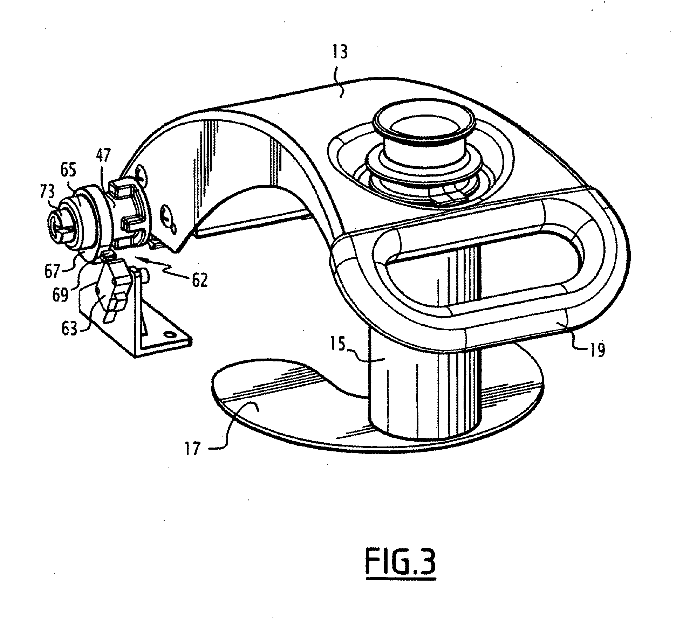

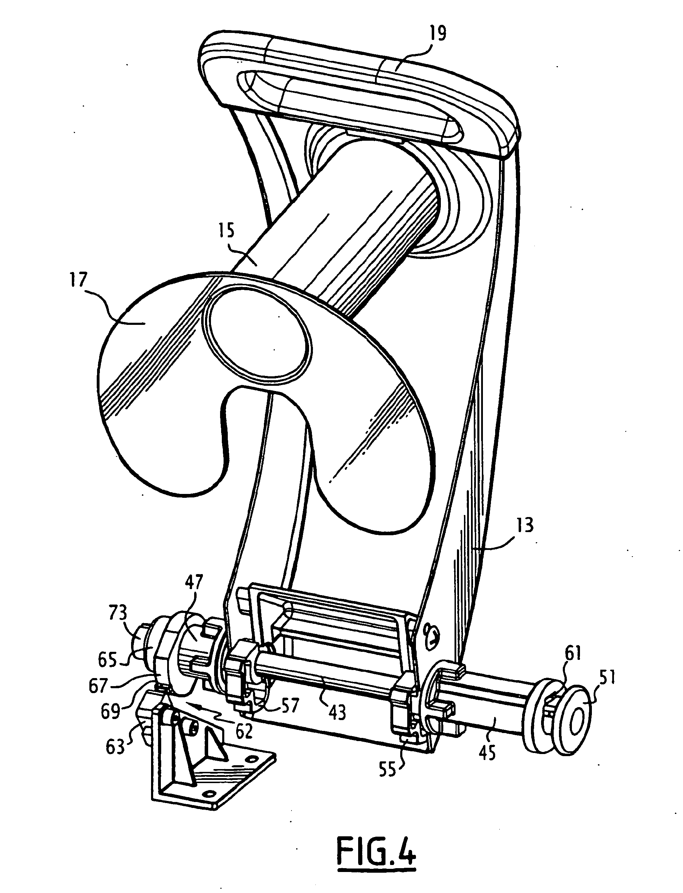

Le premier dispositif de sécurité 62 comprend en outre une bague 65, solidaire d'une came 67 prévue pour coopérer avec un organe mobile d'actionnement 69 (voir notamment Figures 3A et 4A).

Le commutateur 63 possède deux états stables de fonctionnement selon la position de l'organe mobile 69, à savoir un état neutre de conduction correspondant à une position de repos de l'organe mobile 69, et un état de coupure.

La bague 65 est logée à l'intérieur du bâti 7 et emmanchée coaxialement à l'extrémité libre de l'arbre 43, et sur l'extrémité correspondante du palier 47. Une partie 73 en saillie axiale de la bague 65, est engagée dans un alésage cylindrique axial formé dans la paroi latérale du bâti 7. Ainsi, la bague 65, lorsque l'arbre 43 est retiré, est supporté conjointement par le palier 47 et dans l'alésage de la paroi latérale du bâti 7.

L'extrémité libre de l'arbre 43 et la bague 65 sont solidarisées en rotation au moyen de formes complémentaires d'entraînement, coopérant par engagement mutuel axial. Dans l'exemple représenté, ces formes complémentaires d'entraînement sont constituées d'un doigt 75 formé en extrémité de l'arbre 43, de façon parallèle et décalée par rapport à l'axe X-X, et d'un trou correspondant formé dans la bague 65. Le doigt 75 ne peut s'engager dans le trou de la bague 65 qu'à la condition que la bague 65 soit dans une orientation angulaire de référence autour de l'axe X-X.

Sur la Figure 3, on a représenté le levier dans sa position basse (baissée au maximum), et la position relative résultante de la came 67 et du commutateur 69. Cette position relative a été illustrée de façon schématique sur la figure 3A.

On constate sur ces Figures que la came 67 est dans une position angulaire telle qu'elle n'interfère pas avec l'organe d'actionnement 69 du commutateur, c'est-à-dire que l'organe d'actionnement 69 ne subit pas de sollicitation en déplacement de la part de la came 67, et reste dans sa position neutre de repos. Dans cet état neutre du commutateur, ce dernier ne coupe pas l'alimentation électrique du dispositif d'entraînement de l'outil.

Sur la Figure 4, on a représenté le levier 13 dans sa position haute (relevée au maximum), déjà illustrée sur la Figure 1. Dans cette position, l'ouverture de la trémie 11 est laissée libre par le plateau 17, de sorte qu'un accès à l'outil est rendu possible.

Sur la Figure 4A, qui représente schématiquement la position relative de la came 67 et du commutateur 63 dans la position du levier représentée sur la Figure 4, on constate que la came 67 est en contact avec l'organe d'actionnement 69. Ce dernier est déplacé dans une position correspondant à un état de coupure du commutateur. Le circuit d'alimentation du dispositif d'entraînement de l'outil est alors coupé par le premier dispositif de sécurité.

Le levier 13 peut prendre toutes les positions angulaires de débattement autour de l'axe X-X, entre les deux positions extrêmes illustrées sur les figures 3A et 4A, respectivement α₀ (supposé nul) et αₘₐₓ. A partir de la position α₀ correspondant à un angle de levier de référence supposé nul, la coupure intervient dès qu'un angle de seuil αₛ est atteint, et subsiste pour les angles de débattement supérieurs.

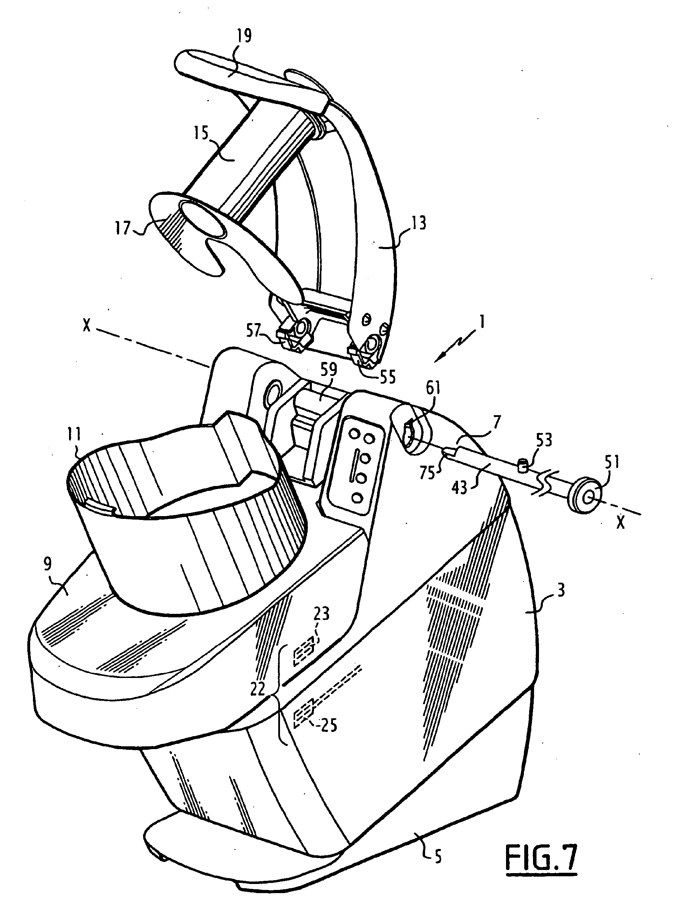

Sur les Figures 5 à 7, on a illustré le mode de démontage du levier 13 par rapport au bâti 7, et plus généralement par rapport au reste de l'appareil 1.

Comme on le comprend au vu de ces figures, pour démonter le levier 13, il suffit dans un premier temps à un utilisateur de saisir l'arbre 43 par la poignée 51 qui fait légèrement saillie de la paroi latérale du bâti 7, et de retirer axialement l'arbre de ses paliers 45, 47. Comme on l'a vu précédemment, l'arbre 43 ne peut être retiré qu'à la condition que les alésages du flasque 55 et du palier 45 coïncident, c'est-à-dire qu'à la condition que le levier soit dans sa position haute (angle de débattement αₘₐₓ), comme cela est représenté sur la figure 5.

Après retrait complet de l'arbre 43 de ses paliers 45, 47, les flasques 55, 57 peuvent être dégagés d'entre les paliers 45, 47, et le levier 13 peut être retiré radialement comme cela est montré sur la figure 6.

De façon analogue, en l'absence de l'arbre 43, la partie de charnière 49 du couvercle peut être dégagée radialement, et le couvercle 9 peut ainsi être retiré du bâti 7.

Comme on le voit sur la Figure 6, lorsque l'arbre 43 et le levier 13 sont retirés, la bague 65 reste emmanchée à l'extrémité 47, en conservant précisément son orientation neutre, préalable au démontage, qui correspond à un état de coupure du commutateur. La came 67 exerce alors, en effet, un appui sur l'organe d'actionnement 69 (état illustré sur la Figure 3A).

Le remontage du levier, et le cas échéant du couvercle, s'effectue de la façon inverse, le levier devant être dans sa position haute (à angle αₘₐₓ comme montré sur la Figure 5), pour permettre l'engagement complet de l'arbre 43 dans les paliers 45, 47, et l'engagement du doigt 75 dans la bague 65.

L'invention qui vient d'être décrite permet de doter l'appareil d'un double niveau de sécurité, sécurité-levier et sécurité-couvercle si nécessaire, avec un fonctionnement indépendant et réellement redondant des deux sécurités.

L'invention permet également un démontage aisé du levier et du couvercle, qui n'implique pas de dérèglement du dispositif de sécurité.

La fiabilité et la précision du dispositif de sécurité associé au levier sont ainsi conservées lors du démontage et du remontage.

## Revendications

1. Appareil de traitement de produits alimentaires, comportant :
- un bâti fixe (7),
- un dispositif électrique d'entraînement d'un outil de traitement,
- un couvercle (9) monté pivotant sur le bâti (7) et pourvu d'une ouverture (11) de chargement des produits à traiter,
- un levier (13) doté d'un organe presseur (15) prévu pour s'engager dans l'ouverture, ledit levier étant monté pivotant par rapport au couvercle (9) autour d'un axe de pivotement (X-X), et
- un premier dispositif de sécurité (62) relié au dispositif d'entraînement et prévu pour couper l'alimentation électrique du dispositif d'entraînement sur au moins une plage de positions angulaires du levier (13) autour de l'axe (X-X),
**caractérisé en ce que** le couvercle (9) et le levier (13) sont montés pivotants autour d'un même axe (X-X), et le premier dispositif de sécurité (62) est prévu pour agir sur l'alimentation électrique du dispositif d'entraînement en fonction de la position angulaire (α) du levier (13) par rapport au bâti (7).

2. Appareil suivant la revendication 1, **caractérisé en ce que** le premier dispositif de sécurité (62) comprend un commutateur électrique (63), relié au dispositif d'entraînement et doté d'un organe d'actionnement (69), et un élément formant came (65) solidaire du levier (13) agencé pour agir sur l'organe d'actionnement (69) de sorte à couper l'alimentation électrique sur ladite plage prédéterminée de positions angulaires.

3. Appareil suivant la revendication 2, **caractérisé en ce que** le commutateur (63) est solidaire du bâti (7).

4. Appareil suivant la revendication 3, **caractérisé en ce que** l'élément formant came (65) et le commutateur (63) sont agencés à l'intérieur du bâti (7).

5. Appareil suivant l'une quelconque des revendications 1 à 4, **caractérisé en ce que** le levier (13) est solidaire en rotation d'un arbre (43) monté pivotant sur le bâti (7), et le couvercle (9) est monté libre en rotation autour dudit arbre, l'arbre (43) matérialisant l'axe commun (X-X) de pivotement du levier (13) et du couvercle (9).

6. Appareil suivant la revendication 5, **caractérisé en ce que** le bâti (7) comprend une paire de manchons coaxiaux fixes (45, 47) formant paliers pour l'arbre (43), dans lesquels est engagé coaxialement l'arbre (43) de façon démontable.

7. Appareil suivant la revendication 6, **caractérisé en ce que** l'arbre (43) et le levier (13) comprennent des organes (53) complémentaires de solidarisation en rotation, prévus pour venir en prise mutuelle par engagement axial.

8. Appareil suivant la revendication 7, **caractérisé en ce que** le levier (13) est monté en prise sur l'arbre (43) entre les manchons creux (45, 47) formant paliers.

9. Appareil suivant la revendication 8, **caractérisé en ce que** l'organe (53) de solidarisation de l'arbre est un organe en saillie radiale, et un premier (45) des manchons creux comprend un évidement axial (61) complémentaire de guidage et d'orientation, prévu pour n'autoriser le montage axial de l'arbre (43) dans ledit manchon (45) et son démontage que dans une seule position angulaire prédéterminée, correspondant à une position de référence du levier (13).

10. Appareil suivant la revendication 9, **caractérisé en ce que** l'élément formant came (65) est une bague montée sur l'arbre (43) de façon démontable par engagement axial, et solidarisée en rotation avec l'arbre (43) au moyen de formes complémentaires d'entraînement (75), prévues pour n'autoriser l'engagement axial de l'arbre (43) dans la bague (65) que dans une seule position angulaire relative prédéterminée, correspondant à une position de référence de l'élément formant came (65).

11. Appareil suivant la revendication 10, **caractérisé en ce que** les formes complémentaires (75) d'entraînement de la bague (65) et de l'arbre (43) sont prévues pour que la position de référence du levier (13) corresponde à la position de référence de l'élément formant came (65).

12. Appareil suivant l'une quelconque des revendications 1 à 11, **caractérisé en ce qu'**il comprend un deuxième dispositif de sécurité (22), relié au dispositif d'entraînement et prévu pour couper l'alimentation électrique du dispositif d'entraînement dès l'ouverture du couvercle (9) par rapport au bâti (7).

13. Appareil suivant la revendication 12, **caractérisé en ce que** le deuxième dispositif de sécurité (22) comprend un dispositif de détection sans contact, notamment magnétique, ayant un organe émetteur (23) agencé dans le couvercle (9), et un organe sensible (25) agencé dans un caisson solidaire du bâti (7).

## Claims

1. Appliance for processing food products, comprising:
- a fixed frame (7),
- an electrical device for driving a processing tool,
- a lid (9) which is mounted to pivot on the frame (7) and which is provided with an opening (11) for loading the products to be processed,
- a lever (13) provided with a presser member (15) which is arranged to engage in the opening, the lever being mounted to pivot relative to the lid (9) about a pivot axis (X-X), and
- a first safety device (62) which is connected to the drive device and which is arranged to cut off the electrical power supply to the drive device over at least one range of angular positions of the lever (13) about the axis(X-X),
**characterised in that** the lid (9) and the lever (13) are mounted to pivot about the same axis (X-X), and the first safety device (62) is arranged to act on the electrical power supply to the drive device in accordance with the angular position (α) of the lever (13) relative to the frame (7).

2. Appliance according to claim 1, **characterised in that** the first safety device (62) comprises an electrical switch (63), which is connected to the drive device and which is provided with an activating member (69), and a cam-forming element (65) which is fixedly joined to the lever (13) and which is arranged to act on the activating member (69) so as to cut off the electrical power supply over the predetermined range of angular positions.

3. Appliance according to claim 2, **characterised in that** the switch (63) is fixedly joined to the frame (7).

4. Appliance according to claim 3, **characterised in that** the cam-forming element (65) and the switch (63) are arranged inside the frame (7).

5. Appliance according to any one of claims 1 to 4, **characterised in that** the lever (13) is fixed for rotation with a shaft (43) mounted to pivot on the frame (7), and the lid (9) is mounted to rotate freely about the shaft, the shaft (43) representing the common pivot axis (X-X) of the lever (13) and the lid (9).

6. Appliance according to claim 5, **characterised in that** the frame (7) comprises a pair of fixed coaxial sleeves (45, 47) forming bearings for the shaft (43), in which the shaft (43) is engaged coaxially in a dismountable manner.

7. Appliance according to claim 6, **characterised in that** the shaft (43) and the lever (13) comprise complementary members (53) for fixing them together for rotation, which members (53) are arranged to interlock with each other by axial engagement.

8. Appliance according to claim 7, **characterised in that** the lever (13) is mounted in an interlocking manner on the shaft (43) between the hollow sleeves (45, 47) forming bearings.

9. Appliance according to claim 8, **characterised in that** the member (53) for the fixing of the shaft is a radially projecting member, and a first (45) of the hollow sleeves comprises a complementary axial guiding and orienting recess (61) which is arranged to permit the axial mounting of the shaft (43) in the sleeve (45) and its dismounting only in one single predetermined angular position, which corresponds to a reference position of the lever (13).

10. Appliance according to claim 9, **characterised in that** the cam-forming element (65) is a ring which is mounted on the shaft (43) in a dismountable manner by axial engagement and which is fixed for rotation with the shaft (43) by means of complementary drive formations (75) which are arranged to permit the axial engagement of the shaft (43) in the ring (65) only in one single predetermined relative angular position, which corresponds to a reference position of the cam-forming element (65).

11. Appliance according to claim 10, **characterised in that** the complementary drive formations (75) of the ring (65) and the shaft (43) are arranged to ensure that the reference position of the lever (13) corresponds to the reference position of the cam-forming element (65).

12. Appliance according to any one of claims 1 to 11, **characterised in that** it comprises a second safety device (22) which is connected to the drive device and which is arranged to cut off the electrical power supply to the drive device as soon as the lid (9) is opened relative to the frame (7).

13. Appliance according to claim 12, **characterised in that** the second safety device (22) comprises a contactless, especially magnetic, detection device having an emitting member (23) arranged in the lid (9), and a sensing member (25) arranged in a casing fixedly joined to the frame (7).

## Patentansprüche

1. Gerät zum Verarbeiten von Lebensmitteln, umfassend:
- ein festes Gehäuse (7),
- eine elektrische Vorrichtung zum Antreiben eines Verarbeitungswerkzeugs,
- eine Abdeckung (9), die schwenkbar an dem Gehäuse (7) montiert und mit einer Öffnung (11) zum Laden von zu verarbeitenden Produkten versehen ist,
- einen Hebel (13), der mit einem Druckmechanismus (15) versehen ist, der so gestaltet ist, dass er in die Öffnung eingreift, wobei der genannte Hebel mit Bezug auf die Abdeckung (9) um eine Drehachse (X-X) schwenkbar montiert ist, und
- eine erste Sicherheitsvorrichtung (62), die mit der Antriebsvorrichtung verbunden und so ausgelegt ist, dass sie die Stromversorgung der Antriebsvorrichtung in wenigstens einem Winkelpositionsbereich des Hebels (13) um die Achse (X-X) unterbricht,
**dadurch gekennzeichnet, dass** die Abdeckung (9) und der Hebel (13) um dieselbe Achse (X-X) schwenkbar montiert sind und die erste Sicherheitsvorrichtung (62) so gestaltet ist, dass sie auf die stromversorgung der Antriebsvorrichtung in Abhängigkeit von der Winkelposition (α) des Hebels (13) mit Bezug auf das Gehäuse (7) einwirkt.

2. Gerät nach Anspruch 1, **dadurch gekennzeichnet, dass** die erste Sicherheitsvorrichtung (62) einen mit der Antriebsvorrichtung verbundenen und mit einem Betätigungsteil (69) versehenen elektrischen Schalter (63) und ein Nockenbildungselement (65) umfasst, das einstückig mit dem Hebel (13) ausgebildet ist und den Zweck hat, so auf das Betätigungsteil (69) einzuwirken, dass es die Stromversorgung in dem genannten vorbestimmten Winkelpositionsbereich unterbricht.

3. Gerät nach Anspruch 2, **dadurch gekennzeichnet, dass** der Schalter (63) einstückig mit dem Gehäuse (7) ist.

4. Gerät nach Anspruch 3, **dadurch gekennzeichnet, dass** das Nockenbildungselement (65) und der Schalter (63) im Innern des Gehäuses (7) vorgesehen sind.

5. Gerät nach einem der Ansprüche 1 bis 4, **dadurch gekennzeichnet, dass** der Hebel (13) rotationsfest mit einer Welle (43) am Gehäuse (7) schwenkbar montiert ist und die Abdeckung (9) um die genannte Welle rotationsfrei montiert ist, wobei die Welle (43) die gemeinsame Drehachse (X-X) des Hebels (13) und der Abdeckung (9) bildet.

6. Gerät nach Anspruch 5, **dadurch gekennzeichnet, dass** das Gehäuse (7) ein Paar feste koaxiale Hülsen (45, 47) umfasst, die Lager für die Welle (43) bilden, in denen die Welle (43) demontierbar koaxial im Eingriff ist.

7. Gerät nach Anspruch 6, **dadurch gekennzeichnet, dass** die Welle (43) und der Hebel (13) komplementäre Teile (53) zur Rotationsfestigkeit umfassen, die so gestaltet sind, dass sie axial miteinander in Eingriff gebracht werden können.

8. Gerät nach Anspruch 7, **dadurch gekennzeichnet, dass** der Hebel (13) so montiert ist, dass er an der Welle (43) zwischen den die Lager bildenden hohlen Hülsen (45, 47) angreift.

9. Gerät nach Anspruch 8, **dadurch gekennzeichnet, dass** das Teil (53) zum Festsetzen der Welle ein radial vorstehendes Teil ist, und eine erste (45) der hohlen Hülsen eine komplementäre axiale Führungs- und Orientierungsvertiefung (61) umfasst mit dem Zweck, eine axiale Montage der Welle (43) in der genannten Hülse und ihre Demontage nur in einer einzigen vorbestimmten Winkelposition zuzulassen, die einer Referenzposition des Hebels (13) entspricht.

10. Gerät nach Anspruch 9, **dadurch gekennzeichnet, dass** das Nockenbildungselement (65) ein Ring ist, der durch axialen Eingriff abnehmbar auf der Welle (43) montiert und mit der Welle (43) dank komplementärer Mitnehmerformen (75) rotationsfest ist, die vorgesehen sind, damit ein axialer Eingriff der Welle (43) in den Ring (65) nur in einer einzigen vorbestimmten relativen Winkelposition möglich ist, die einer Referenzposition des Nockenbildungselementes (65) entspricht.

11. Gerät nach Anspruch 10, **dadurch gekennzeichnet, dass** die komplementären Mitnehmerformen (75) des Rings (65) und der Welle (43) vorgesehen sind, damit die Referenzposition des Hebels (13) der Referenzposition des Nockenbildungselementes (65) entspricht.

12. Gerät nach einem der Ansprüche 1 bis 11, **dadurch gekennzeichnet, dass** es eine zweite Sicherheitsvorrichtung (22) umfasst, die mit der Antriebsvorrichtung verbunden ist und die Aufgabe hat, die Stromversorgung der Antriebsvorrichtung zu unterbrechen, sobald die Abdeckung (9) mit Bezug auf das Gehäuse (7) geöffnet wird.

13. Gerät nach Anspruch 12, **dadurch gekennzeichnet, dass** die zweite Sicherheitsvorrichtung (22) eine kontaktlose, nämlich magnetische Erkennungsvorrichtung umfasst, die einen in der Abdeckung (9) vorgesehenen Sender (23) und ein Detektionselement (25) aufweist, das in einem an das Gehäuse (7) angeformten Fach vorgesehen ist.
